# FASCICULE DE BREVET EUROPEEN

(11) **EP 2 199 192 B1**
(45) Date de publication et mention de la délivrance du brevet: **03.08.2011**
(21) Numéro de dépôt: 09290921.7
(22) Date de dépôt: 09.12.2009
(51) Int. Cl.: B62D 55/21

(54) **Axe de liaison pour maillons de chenille de véhicule**
Verbindungsachse für Raupenkettenglieder eines Fahrzeugs
Linking pin for vehicle caterpillar links

(30) Priorité: 16.12.2008 FR 0807143
(43) Date de publication de la demande: 23.06.2010
(73) Titulaire: NEXTER Systems, 42328 Roanne Cedex (FR)
(72) Inventeur: Brun, Michel, 18023 Bourges Cedex (FR)
(74) Mandataire: Célanie, Christian

(56) Documents cités:
- FR-A- 2 537 939
- US-A- 2 391 907
- US-A- 4 139 241

## Description

Le domaine technique de l'invention est celui des chenilles de véhicule et plus particulièrement celui des chenilles à connecteur et des moyens de liaison entre les maillons d'une chenille à connecteurs. Il est connu de réaliser des chenilles de véhicule par l'assemblage de différents maillons au moyen d'axes et de connecteurs.

On pourra par exemple consulter les brevets US4700992 et US4139241 qui décrivent un tel type de chenille.

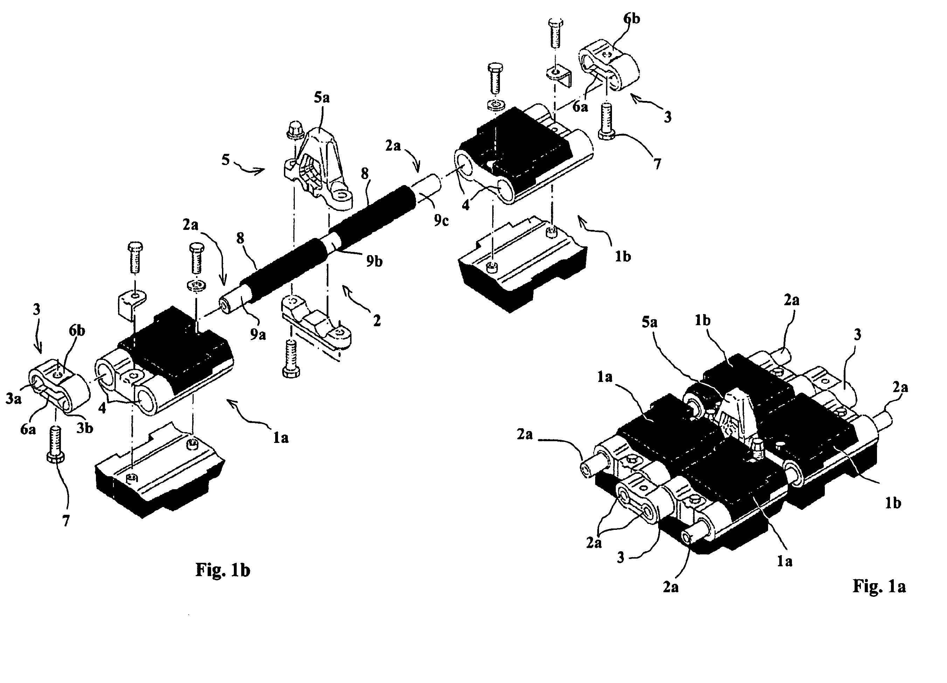

On a représenté à titre d'exemple aux figures 1a et 1b un tel type de moyen de liaison connu. La figure 1a montre quatre maillons 1 (1a,1b) assemblés et la figure 1b montre sous forme éclatée différents composants de ce montage. Les parties représentées en noir sur ces figures sont réalisées en caoutchouc.

On voit sur ces figures que les maillons 1 ne sont pas liés directement les uns aux autres. Ils sont rendus solidaires par l'intermédiaire d'axes 2 et de connecteurs 3.

Ainsi chaque maillon 1 comporte deux perçages parallèles 4 qui reçoivent chacun un axe 2 (un seul axe est représenté sur la figure 1b).

On voit sur la figure 1b que chaque axe 2 porte ainsi deux maillons 1a, 1b symétriques l'un de l'autre. Chaque paire de maillons 1 se trouve ensuite fixée à une autre paire analogue au moyen de connecteurs 3 qui sont attachés à l'axe 2. La figure la montre un tel assemblage.

On remarque sur la figure la que, après l'assemblage des maillons 1 sur les axes 2, les extrémités 2a des axes 2 sont en saillie au niveau des rebords externes des maillons 1 ce qui permet de fixer les connecteurs 3. Chaque paire de maillons 1a,1b est ainsi fixée à une paire voisine par deux connecteurs d'extrémité 3.

On notera par ailleurs que chaque paire de maillons 1a,1b est aussi fixée à la paire voisine par un connecteur central 5 (visible également figure 1b). Ce connecteur central comporte deux brides fixées par vis et il porte un prolongement 5a qui joue le rôle de dent de guidage pour la chenille.

D'une façon classique les connecteurs d'extrémité 3 comprennent deux trous cylindriques 3a,3b, destinés à coiffer les axes 2, et reliés par des languettes 6a,6b. Une vis 7 traverse les languettes 6a,6b et coopère avec un taraudage aménagé dans une des languettes. Le serrage de cette vis permet de rapprocher élastiquement les languettes 6a,6b l'une de l'autre ce qui provoque un serrage du connecteur 3 sur les axes 2.

Le connecteur 3 et les extrémités de l'axe pourront être pourvues d'un ou plusieurs méplats (non représentés). Une telle disposition assurera un positionnement relatif des maillons donnant une flexion préalable entre maillons successifs. On facilitera ainsi l'enroulement des chenilles sur le barbotin, la poulie de tension et les galets extrêmes du train de roulement.

Comme cela est plus particulièrement visible à la figure 1b, chaque axe 2 comporte deux couronnes 8 d'un revêtement d'un matériau synthétique. L'axe comporte ainsi trois portées 9a,9b et 9c (qui pourront être cylindriques ou prismatiques), portées délimitant les deux couronnes 8. Les connecteurs 3 et 5 sont fixés sur ces portées.

Les couronnes 8 sont réalisées le plus souvent en caoutchouc, soit d'un seul bloc par surmoulage soit par enfilage de différents anneaux concentriques collés les uns aux autres (anneaux dénommés adhérites).

Ces couronnes 8 s'interposent entre l'axe 2 et le maillon 1. Elles permettent d'absorber une partie des contraintes mécaniques reçues des maillons. Elles permettent d'éviter également les frottements métal sur métal entre l'axe 2 et le maillon 1 lors du fonctionnement de la chenille. En effet de tels frottements conduiraient à une usure prématurée des axes ce qui entraînerait des ruptures.

Par ailleurs le caoutchouc des couronnes 8 permet d'autoriser des déformations différentes pour les axes 2 d'un maillon à l'autre lors du fonctionnement de la chenille. Les couronnes 8 ne doivent pas glisser lors du fonctionnement et elles supportent par leur déformation les torsions relatives des axes 2 par rapport aux maillons 1.

Un tel montage classique présente cependant encore des inconvénients.

En effet les déformations auxquelles elles sont soumises entraînent un échauffement important des couronnes 8. Ces dernières sont par ailleurs échauffées par les maillons 1 eux même qui, lors du roulage, sont sollicités par écrasement entre le sol et les galets de roulement du véhicule. Les couronnes 8, fortement échauffées, peuvent difficilement se refroidir, les matériaux de type caoutchouc conduisant mal la chaleur.

Il en résulte une détérioration des couronnes qui finissent par ne plus isoler les axes 2 d'avec les maillons 1. Ceci conduit à plus ou moins long terme à un contact métal sur métal de l'axe 2 avec les maillons 1 (1a, 1b). Ce contact accroît l'échauffement ce qui détruit les couronnes d'adhérites ainsi que d'autres pièces de caoutchouc du maillon. La résistance à l'avancement du véhicule se trouve alors accrue et peut conduire à des ruptures de chenilles.

L'invention a pour objet de proposer un axe de liaison permettant de limiter l'échauffement des couronnes synthétiques ce qui augmente la durée de vie des chenilles.

Ainsi, l'invention a pour objet un axe de liaison entre des maillons de chenille d'un véhicule et les connecteurs de ces maillons, axe comportant au moins une couronne d'un revêtement d'un matériau synthétique, couronne interposée entre l'axe et au moins un maillon et permettant d'absorber une partie des contraintes mécaniques reçues des maillons, l'axe comportant au moins deux portées de part et d'autre de la couronne, portées sur lesquelles sont fixés des connecteurs, axe caractérisé en ce qu'il comprend au moins un alésage axial s'étendant longitudinalement d'une portée à une autre portée, l'alésage étant obturé de part et d'autre par des moyens de fermeture et renfermant un matériau comportant une phase liquide et permettant d'évacuer vers les connecteurs les calories risquant de s'accumuler au niveau de la couronne, le volume de ce matériau à l'état liquide étant inférieur au volume total de l'alésage afin de permettre la circulation du matériau

D'une façon préférée, le volume de matériau à l'état liquide sera inférieur à la moitié du volume total de l'alésage.

La surface interne de l'alésage pourra avantageusement comporter des rainures longitudinales.

Au moins un moyen de fermeture de l'alésage pourra être démontable.

L'alésage renfermant le matériau pourra être partiellement sous vide.

Selon un premier mode de réalisation, le matériau sera choisi tel qu'il se vaporise à une température d'au moins 20°C inférieure à une température critique Tc, définie comme la température à laquelle la couronne risque de se détériorer, la vaporisation du matériau se produisant au niveau des parties les plus chaudes de l'axe, et le matériau se condensant au voisinage des connecteurs, un mouvement de convection qui apparaît à l'intérieur de l'axe assurant le refroidissement de ce dernier au voisinage de la couronne.

Le matériau vaporisable pourra être choisi parmi les matériaux suivants : eau, alcools, trichloréthylène, trichloréthane, tétrahydrofurane, thiols.

Selon un autre mode de réalisation, le matériau sera un métal ou un alliage métallique qui est liquide à une température d'au moins 20°C inférieure à une température critique Tc, c'est à dire une température à laquelle la couronne risque de se détériorer.

Pour une température critique de l'ordre de 120°C, le métal ou l'alliage métallique pourra être choisi dans la liste suivante : sodium, potassium, rubidium, gallium, césium, mercure, alliage sodium/potassium.

L'invention sera mieux comprise à la lecture du descriptif qui va suivre, fait en référence aux dessins annexés et dans lesquels :
- les figures 1a et 1b montrent un moyen de liaison de maillons de chenille par axes et connecteurs selon l'art antérieur, la figure la étant une vue assemblée et la figure 1b une vue éclatée partielle,
- la figure 2 est une vue en coupe longitudinale partielle d'un axe conforme à l'invention et mis en place sur une paire de maillons, - la figure 3 est une vue de ce même axe, seul et en coupe transversale,
- la figure 4 schématise le fonctionnement de l'axe selon l'invention,
- la figure 5 est une vue en coupe transversale d'un axe selon un autre mode de réalisation de l'invention,
- la figure 6 est une vue en coupe longitudinale d'un axe selon un autre mode de réalisation de l'invention.

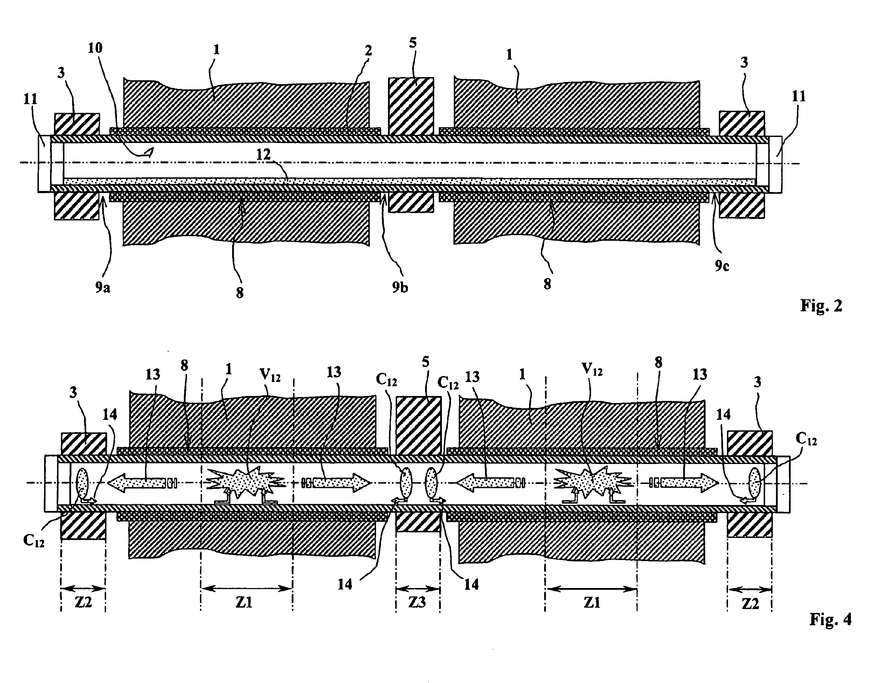

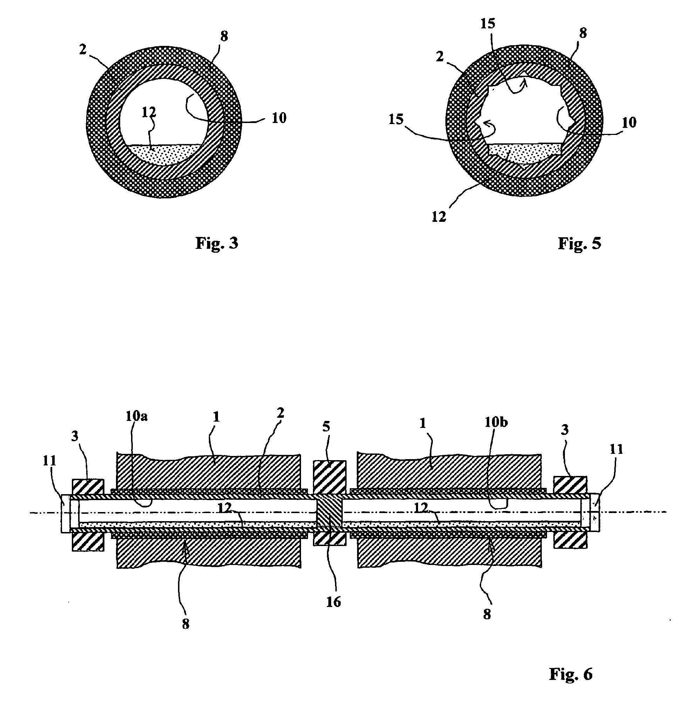

En se reportant aux figures 2 et 3 un axe de liaison 2 selon un premier mode de réalisation de l'invention comporte comme les axes connus deux couronnes 8 d'un revêtement d'un matériau synthétique (par exemple du caoutchouc). Ces couronnes 8 sont interposées entre l'axe 2 et les maillons 1.

Comme cela a été décrit précédemment en référence aux figures 1a et 1b, les couronnes 8 délimitent sur l'axe 2 des portées 9a, 9b et 9c. La portée médiane 9b reçoit un connecteur central 5 et les portées latérales 9a et 9c reçoivent chacune un connecteur d'extrémité 3.

Selon une caractéristique de l'invention, l'axe 2 est tubulaire et comprend donc un alésage axial 10 qui s'étend longitudinalement de la portée 9a à la portée 9c.

Cet alésage 10 est obturé de part et d'autre par des moyens de fermeture 11 qui sont constitués ici par des bouchons filetés, coopérant chacun avec un taraudage aménagé sur l'alésage 10.

Il serait bien entendu possible de mettre en oeuvre d'autres types de moyens de fermeture (bouchon soudé par exemple).

Selon une autre caractéristique de l'invention, l'alésage 10 renferme un matériau 12 qui comporte une phase liquide.

Le matériau 12 ne remplit pas à l'état liquide complètement le volume total de l'alésage. En effet, il est nécessaire que le matériau 12 puisse circuler dans cet alésage 10.

A la température ambiante, le volume occupé par le matériau sera de préférence inférieur à la moitié du volume total de l'alésage. Au moins un des bouchons 11 sera démontable (pendant une partie de la vie de l'équipement) ce qui permettra d'introduire le matériau 12 ou de compléter son niveau.

Selon un premier mode de réalisation de l'invention, le matériau 12 est choisi de telle sorte qu'il se vaporise à une température d'au moins 20°C inférieure à une température critique Tc, définie comme étant celle à laquelle la couronne 8 risque de se détériorer.

Concrètement, si la température critique est de l'ordre de 120°C, on choisira un fluide se vaporisant pour une température inférieure ou égale à Tc-20°C soit aux environs de 100°C ; par exemple de l'eau, du méthanol, de l'éthanol, d'autres alcools de plus fort poids moléculaire (tel que l'isopropanol), du trichloréthylène ou trichloréthane, du tétrahydrofurane, des thiols.

Les thiols sont des substances chimiques homologues des alcools, dans lesquelles une terminaison -SH (sulfhydrile) remplace la terminaison -OH des alcools.

On a schématisé à la figure 4 le mode de fonctionnement de l'axe selon l'invention.

Lors du fonctionnement de la chenille, la température des maillons 1 s'accroît fortement. Il en résulte l'apparition de zones médianes Z1 au niveau desquelles la température est maximale (de l'ordre de Tc = 120°C dans notre hypothèse, sans la mise en oeuvre de l'invention), alors que les zones périphériques Z2 et Z3 ont une température plus faible en raison d'une part du contact avec l'air ambiant (pour les zones d'extrémité Z2) et de la présence de masses métalliques en contact direct avec l'axe 2 et permettant d'évacuer les calories (connecteurs de différents types, médian 5 et extrêmes 3, portions de maillons non recouvertes de caoutchouc, tant pour les zones Z2 que Z3).

Lors de la mise en oeuvre de l'invention, la température des zones périphériques Z2 et Z3 va augmenter. Parallèlement la température des zones médianes Z1 va s'abaisser. Toutes les températures devenant proches de la température de vaporisation du liquide (soit près de 20°C en dessous de la température critique Tc).

Les zones sont localisées sur les figures à titre purement indicatif. La température n'est bien entendu pas la même tout au long de chaque zone, ni entre zones différentes. Les écarts thermiques resteront cependant modérés. Les parties les plus chaudes de la zone Z1 se situent sensiblement à mi-chemin des connecteurs 3 et 5. La température décroît progressivement entre cette partie médiane et les extrémités de l'axe 2.

Le matériau 12 va se vaporiser (apparition d'une phase vapeur V₁₂) au niveau des zones Z1 du tube 2. Ce changement d'état conduit à l'absorption de calories fournies par le tube, donc au refroidissement de la zone Z1.

La vapeur engendrée, qui occupe un volume plus grand que le matériau liquide originel, s'éloigne de part et d'autre de la zone Z1 (flèches 13) en direction des parties plus froides du tube 2, donc vers les zones Z2 et Z3.

Au niveau de ces dernières zones Z2 et Z3 le matériau va se condenser (C₁₂). Ce retour à l'état liquide transfère au niveau des connecteurs 3, 5 les calories qui ont été prélevées au niveau des zones chaudes Z1. Le liquide va ensuite s'écouler le long de la paroi du tube 2 (flèches 14). Ce retour est facilité par l'agitation vigoureuse de l'axe 2 qui résulte du fonctionnement normal de la chenille.

Le matériau liquide 12 revient donc vers les zones centrales Z1 où il va à nouveau se vaporiser. Il apparaît donc en régime permanent un mouvement de convection à l'intérieur de l'axe qui assure son refroidissement au voisinage de la couronne 8.

L'axe 2 selon l'invention constitue ainsi une machine thermique (caloduc) qui assure le refroidissement des couronnes isolantes 8 ce qui permet leur maintien à une température raisonnable et augmente leur durée de vie.

L'écart de température entre les zones Z1 et Z2/Z3 au niveau d'un axe selon l'art antérieur (donc n'incorporant pas les moyens de l'invention) peut atteindre 40°C. La mise en oeuvre de l'invention permet de stabiliser globalement la température de l'axe au niveau de la température de changement d'état du liquide (soit au moins 20°C en dessous de la température critique Tc).

On a choisi cet écart d'au moins 20°C pour assurer dans tous les cas une température de fonctionnement en régime permanent qui est nettement en dessous de la température critique Tc.

L'axe 2 proposé par l'invention constitue ainsi un caloduc dans lequel circule spontanément un fluide en équilibre entre ses phases liquide et vapeur. Le "moteur thermique" de ce caloduc est constitué par les changements de phase et l'absorption - libération des chaleurs latentes associées.

Les principaux échanges thermiques se produisent en bout de ligne, c'est dire sur les parois des zones Z1 et Z2-Z3.

Le flux thermique entrant (côté Z1) et le flux thermique sortant (côté Z2-Z3) s'équilibreront par croissance de la pression interne et de la température (jusqu'au niveau de la température de changement d'état du liquide), jusqu'à ce que l'égalité des flux soit réalisée.

Le matériau 12 sera choisi en fonction de la température critique Tc de la couronne 8. Avantageusement le matériau 12 sera mis en place dans l'alésage 10 sous un vide partiel. Une telle disposition permet de faciliter les mouvements de convection, la phase gazeuse n'étant alors pas gênée par une masse d'air complémentaire.

Le vide partiel permet aussi un enclenchement rapide du phénomène de vaporisation-condensation car, à basse pression, les températures d'ébullition s'abaissent considérablement.

Ce vide initial sera choisi suffisant pour garantir des niveaux thermiques acceptables dans les couples "pression interne - température de changement d'état" qui apparaîtront (1a vaporisation fait en effet inévitablement augmenter la pression interne à l'alésage).

L'Homme du Métier pourra procéder à des simulations numériques du flux thermique pour définir la valeur de vide requise ainsi que la température de vaporisation associée, ce qui permettra également de choisir le matériau 12 le plus approprié.

Il n'est pas gênant d'utiliser un matériau pouvant geler. En effet, lors du fonctionnement de l'axe, la liquéfaction interviendra automatiquement avec l'échauffement de l'axe (bien entendu si ce changement d'état est réversible pour le matériau considéré) et le cycle ultérieur vaporisation / condensation pourra se produire normalement. S'il y a augmentation de volume du matériau liée au gel, celle-ci pourra se faire sans dommage du fait d'un remplissage partiel de l'alésage (inférieur à la moitié du volume à l'état liquide).

Afin de favoriser l'adhérence de la phase liquide sur la paroi de l'axe 2 ainsi que ses mouvements de retour par capillarité on prévoira avantageusement des rainures longitudinales sur la surface interne de l'alésage 10.

La figure 5 montre une coupe d'un axe 2 qui comporte ainsi des rainures 15 à profil en V, rainures régulièrement réparties angulairement autour de l'axe de l'alésage 10 (ici huit rainures). Il est bien entendu possible de réaliser des rainures ayant une autre forme de profil (en U par exemple). Les rainures 15 permettent par ailleurs d'augmenter la surface d'échange thermique entre le liquide 12 et l'axe 2. La forme en U des rainures étant par ailleurs la forme donnant la plus grande surface d'échange.

La figure 6 montre un autre mode de réalisation de l'invention qui diffère du précédent en ce que l'axe 2 comporte deux alésages 10a et 10b séparés par une cloison 16 réalisée en un matériau thermiquement conducteur. La cloison 16 se trouve disposée au niveau du connecteur médian 5. Chaque alésage 10a, 10b est obturé par un bouchon spécifique 11 et il renferme un matériau 12.

Ce mode de réalisation permet d'améliorer le transfert thermique au niveau du connecteur médian 5. Cette cloison 16, ainsi que les bouchons 11, peut être garnie de picots ou autres proéminences accroissant sa surface d'échange thermique.

La cloison 16 constitue en effet alors une zone froide qui est en bon contact thermique avec le connecteur 5. L'axe 2 comporte alors deux machines thermiques distinctes, une pour chaque maillon 1 solidaire du même axe 2. Les mouvements de convection dirigés vers le connecteur médian 5 sont arrêtés par une cloison froide 16 sur laquelle la condensation est plus facilement provoquée.

Selon un second mode de réalisation de l'invention, on pourra utiliser comme matériau 12 non pas un matériau vaporisable mais un métal (ou un alliage métallique) qui est liquide à une température inférieure d'au moins 20°C à la température critique Tc (température à laquelle la couronne risque de se détériorer).

Dans ce cas, le phénomène physique mis en oeuvre pour le refroidissement n'est plus le changement d'état d'un matériau mais la simple conduction thermique, activée par les mouvements d'avance du véhicule.

La conductibilité thermique des métaux liquides est en effet importante et l'agitation à laquelle ils se trouvent soumis lors du mouvement de la chenille permet de faciliter l'évacuation des calories entre les zones chaude Z1 et les zones froides Z2 et Z3.

Avec une température critique de l'ordre de 120°C (par exemple) le métal (ou l'alliage métallique) pourra être choisi dans la liste suivante : sodium (point de fusion 95°C), potassium (point de fusion 63°C), rubidium (point de fusion 39°C), gallium (point de fusion 30°C), césium (point de fusion 29°C), NaK = alliage sodium-potassium (point de fusion = -12°C), mercure (point de fusion -39°C).

La toxicité et la forte réactivité de bon nombre de ces matériaux face à l'oxygène, à l'humidité et à divers autres éléments, imposera des précautions particulières lors de la phase de mise en place dans l'alésage 10 de l'axe 2.

L'alésage 10 devra avoir alors une étanchéité totale et définitive, avec ses bouchons terminaux mis en place (soudés). On s'assurera par ailleurs de la compatibilité chimique du métal ou de l'alliage introduit avec le matériau constitutif de l'axe 2 et des bouchons 11.

Là encore le vide pourra être réalisé dans l'alésage 10 ce qui permettra d'éviter les problèmes d'oxydation des métaux considérés. On pourra par ailleurs réaliser un vide partiel de l'alésage et mettant en oeuvre un gaz inerte vis à vis des métaux ou alliages.

## Revendications

1. Axe de liaison (2) entre des maillons (1; 1a, 1b) de chenille d'un véhicule et les connecteurs (3, 5) de ces maillons, axe comportant au moins une couronne (8) d'un revêtement d'un matériau synthétique, couronne interposée entre l'axe (2) et au moins un maillon (1; 1a, 1b) et permettant d'absorber une partie des contraintes mécaniques reçues des maillons, l'axe (2) comportant au moins deux portées (9a, 9b, 9c) de part et d'autre de la couronne (8), portées sur lesquelles sont fixés des connecteurs (3,5), axe ***caractérisé en ce* qu'**il comprend au moins un alésage axial (10) s'étendant longitudinalement d'une portée à une autre portée, l'alésage étant obturé de part et d'autre par des moyens de fermeture et renfermant un matériau (12) comportant une phase liquide et permettant d'évacuer vers les connecteurs (3, 5) les calories risquant de s'accumuler au niveau de la couronne (8), le volume de ce matériau à l'état liquide étant inférieur au volume total de l'alésage (10) afin de permettre la circulation du matériau.

2. Axe de liaison entre des maillons de chenille selon la revendication 1, **caractérisé en ce que** le volume de matériau (12) à l'état liquide est inférieur à la moitié du volume total de l'alésage (10).

3. Axe de liaison entre des maillons de chenille selon une des revendications 1 ou 2, **caractérisé en ce que** la surface interne de l'alésage (10) comporte des rainures longitudinales (15).

4. Axe de liaison entre des maillons de chenille selon une des revendications 1 à 3, **caractérisé en ce qu'**au moins un moyen de fermeture (11) de l'alésage (10) est démontable.

5. Axe de liaison entre des maillons de chenille selon une des revendications 1 à 4, **caractérisé en ce que** l'alésage (10) renfermant le matériau (12) est partiellement sous vide.

6. Axe de liaison entre des maillons de chenille selon une des revendications 1 à 5, **caractérisé en ce que** le matériau (12) se vaporise à une température d'au moins 20°C inférieure à une température critique Tc, définie comme la température à laquelle la couronne (8) risque de se détériorer, la vaporisation du matériau (12) se produisant au niveau des parties les plus chaudes de l'axe, et le matériau se condensant au voisinage des connecteurs (3, 5), un mouvement de convection qui apparaît à l'intérieur de l'axe (2) assurant le refroidissement de ce dernier au voisinage de la couronne (8).

7. Axe de liaison entre des maillons de chenille selon la revendication 6, **caractérisé en ce que** le matériau vaporisable (12) est choisi parmi les matériaux suivants : eau, alcools, trichloréthylène, trichloréthane, tétrahydrofurane, thiols.

8. Axe de liaison entre des maillons de chenille selon une des revendications 1 à 5, **caractérisé en ce que** le matériau (12) est un métal ou un alliage métallique qui est liquide à une température d'au moins 20°C inférieure à une température critique Tc, c'est à dire une température à laquelle la couronne (8) risque de se détériorer.

9. Axe de liaison entre des maillons de chenille selon la revendication 8, **caractérisé en ce que**, pour une température critique de l'ordre de 120°C, le métal ou l'alliage métallique est choisi dans la liste suivante : sodium, potassium, rubidium, gallium, césium, mercure, alliage sodium/potassium.

## Claims

1. A linking pin (2) between the chain links (1; 1a; 1b) of a vehicle track and the connectors (3, 5) of these links, such pin incorporating at least one ring (8) of a synthetic material coating, such ring positioned between the pin (2) and at least one link (1; 1a; 1b) and enabling part of the mechanical stresses to which the links are exposed to be absorbed, the pin (2) incorporating at least two supports (9a, 9b, 9c) on either side of the ring (8), supports onto which the connectors (3, 5) are fixed, pin **characterised in that** it comprises at least one axial bore (10) extending longitudinally from one support to the other, the bore being blocked on one side and on the other by closing means and enclosing a material (12) incorporating a liquid phase and enabling the calories that may build up in the ring (8) to be evacuated towards the connectors (3, 5), the volume of this material in the liquid state being below the total volume of the bore (10) so as to enable the material to circulate.

2. A linking pin between track chain links according to Claim 1, **characterised in that** the volume of the material (12) in the liquid state takes up less than half the total volume of the bore (10).

3. A linking pin between track chain links according to one of Claims 1 or 2, **characterised in that** the inner surface of the bore (10) incorporates longitudinal grooves (15).

4. A linking pin between the track chain links according to one of Claims 1 to 3, **characterised in that** at least one closing means (11) for the bore (10) is removable.

5. A linking pin between track chain links according to one of Claims 1 to 4, **characterised in that** the bore (10) enclosing the material (12) is in a partial vacuum.

6. A linking pin between track chain links according to one of Claims 1 to 5, **characterised in that** the material (12) vaporises at a temperature of at least 20°C below a critical temperature Tc, defined as the temperature at which the ring (8) is likely to deteriorate, the vaporisation of the material (12) occurring in the hottest parts of the pin, and the material condensing near to the connectors (3, 5), a convection motion appearing inside the pin (2) ensuring its cooling in the vicinity of the ring (8).

7. A linking pin between track chain links according to Claim 6, **characterised in that** the vaporisable material (12) is selected from among the following materials: water, alcohols, trichloroethylene, trichloroethane, tetrahydrofuran, thiols.

8. A linking pin between track chain links according to one of Claims 1 to 5, **characterised in that** the material (12) is a metal or metallic alloy that is liquid at one temperature of at least 20°C below a critical temperature Tc, that is to say a temperature at which the ring (8) is likely to deteriorate.

9. A linking pin between track chain links according to Claim 8, **characterised in that**, for a critical temperature of around 120°C, the metal or metallic alloy is selected from the following list: sodium, potassium, rubidium, gallium, caesium, mercury, sodium/potassium alloy.

## Patentansprüche

1. Verbindungsachse (2) zwischen Raupenkettengliedern (1; 1a, 1b) eines Fahrzeugs und den Verbindungsstücken (3, 5) dieser Kettenglieder, wobei die Achse wenigstens einen Kranz (8) einer Ummantelung aus einem synthetischen Material umfasst, wobei der Kranz zwischen der Achse (2) und wenigstens einem Kettenglied (1; 1a, 1b) eingefügt ist und es ermöglicht, einen Teil der von den Kettengliedern aufgenommenen mechanischen Beanspruchungen zu absorbieren, wobei die Achse (2) wenigstens zwei Flächen (9a, 9b, 9c) beiderseits des Kranzes (8) umfasst, wobei Verbindungsstücken (3, 5) auf diesen Flächen befestigt sind, wobei die Achse ***dadurch gekennzeichnet ist, dass*** sie wenigstens eine axiale Bohrung (10) umfasst, die sich von einer Fläche zur anderen Fläche in Längsrichtung erstreckt, wobei die Bohrung beiderseits durch Verschlussmittel verschlossen wird und ein Material (12) einschließt, das eine flüssige Phase aufweist und es ermöglicht, die Wärme, die sich im Bereich des Kranzes (8) anzusammeln droht, zu den Verbindungsstücken (3, 5) abzuführen, wobei das Volumen dieses sich im flüssigen Zustand befindlichen Materials kleiner als das Gesamtvolumen der Bohrung (10) ist, um die Zirkulation des Materials zu gewährleisten.

2. Verbindungsachse zwischen Raupenkettengliedern nach Anspruch 1, **dadurch gekennzeichnet, dass** das Volumen des sich im flüssigen Zustand befindlichen Materials (12) kleiner als die Hälfte des Gesamtvolumens der Bohrung (10) ist.

3. Verbindungsachse zwischen Raupenkettengliedern nach einem der Ansprüche 1 oder 2, **dadurch gekennzeichnet, dass** die innere Fläche der Bohrung (10) Längsrillen (15) umfasst.

4. Verbindungsachse zwischen Raupenkettengliedern nach einem der Ansprüche 1 bis 3, **dadurch gekennzeichnet, dass** wenigstens ein Verschlussmittel (11) der Bohrung (10) demontierbar ist.

5. Verbindungsachse zwischen Raupenkettengliedern nach einem der Ansprüche 1 bis 4, **dadurch gekennzeichnet, dass** die das Material (12) einschließende Bohrung (10) teilweise unter Vakuum steht.

6. Verbindungsachse zwischen Raupenkettengliedern nach einem der Ansprüche 1 bis 5, **dadurch gekennzeichnet, dass** das Material (12) bei einer Temperatur von wenigstens 20°C niedriger als eine kritische Temperatur Tc verdampft, die als die Temperatur definiert ist, bei welcher der Kranz droht, sich zu verschlechtern, wobei die Verdampfung des Materials (12) im Bereich der heißesten Abschnitte der Achse entsteht und das Material in der Nähe der Verbindungsstücke (3, 5) kondensiert, wobei eine Konvektionsbewegung, die im Inneren der Achse (2) auftritt, die Abkühlung dieser Letzteren in der Nähe des Kranzes (8) gewährleistet.

7. Verbindungsachse zwischen Raupenkettengliedern nach Anspruch 6, **dadurch gekennzeichnet, dass** das verdampfbare Material (12) aus den folgenden Materialien ausgewählt wird: Wasser, Alkohole, Trichlorethylen, Trichlorethan, Tetrahydrofuran, Thiole.

8. Verbindungsachse zwischen Raupenkettengliedern nach einem der Ansprüche 1 bis 5, **dadurch gekennzeichnet, dass** das Material (12) ein Metall oder eine metallische Legierung ist, die bei einer Temperatur von wenigstens 20°C niedriger als eine kritische Temperatur Tc flüssig ist, das heißt eine Temperatur, bei welcher der Kranz (8) droht, sich zu verschlechtern.

9. Verbindungsachse zwischen Raupenkettengliedern nach Anspruch 8, **dadurch gekennzeichnet, dass** für eine kritische Temperatur in der Größenordnung von 120°C das Metall oder die metallische Legierung aus der folgenden Liste ausgewählt wird: Natrium, Kalium, Rubidium, Gallium, Zäsium, Quecksilber, Kalium/Natrium Legierung.
